# DEMANDE DE BREVET EUROPEEN

(11) **EP 1 018 488 A1**
(43) Date de publication de la demande: **12.07.2000**
(21) Numéro de dépôt: 99403218.3
(22) Date de dépôt: 20.12.1999
(51) Int. Cl.: C01B 31/18, C01B 3/56, C01B 3/50, B01D 53/047, B01D 53/22

(54) **Procédé et installation de production de monoxyde de carbone**

(30) Priorité: 05.01.1999 FR 9900020
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Engler, Yves, 94300 Vincennes (FR)
(74) Mandataire: Le Moenner, Gabriel

(57) **Abrégé**

Un gaz de synthèse obtenu par réformage à la vapeur est envoyé à une unité d'adsorption à modulation de pression (2) qui sépare un mélange CO/H₂, en tant que gaz de production, des autres constituants. Le mélange CO/H₂ est envoyé à une unité (3) de purification au moins partielle du CO, par exemple une unité de perméation, qui produit sous pression le CO avec une pureté élevée ou un mélange H₂/CO à teneur ajustée en CO, contenant très peu d'impuretés.

## Description

La présente invention est relative à un procédé et à une installation de production de CO (monoxyde de carbone) à partir d'un gaz d'alimentation contenant essentiellement, outre le CO, de l'hydrogène H₂ et d'autres constituants, notamment du CO₂ (dioxyde de carbone), du méthane et de l'eau.

L'invention a pour but de fournir une technique permettant de produire de façon économique du CO avec une pureté élevée et sous une pression directement exploitable.

A cet effet, dans le procédé suivant l'invention :
- dans une première étape, on envoie le gaz d'alimentation dans une unité d'adsorption à modulation de pression (PSA ou Pressure Swing Adsorption) qui contient un adsorbant ayant une faible affinité pour l'hydrogène et le CO et une forte affinité pour lesdits autres constituants; et
- on envoie le gaz de production de l'unité PSA, constitué essentiellement d'un mélange CO/H₂, à une unité de purification au moins partielle du CO, du type à perméation équipée de membranes à forte sélectivité CO/H₂ fournissant en sortie du CO pur.

L'installation suivant l'invention, destinée à la mise en oeuvre du procédé défini ci-dessus comprend :
- une unité d'adsorption à modulation de pression (PSA ou Pressure Swing Adsorption) qui contient un adsorbant ayant une faible affinité pour l'hydrogène et le CO et une forte affinité pour lesdits autres constituants, cette unité étant reliée à une source dudit gaz d'alimentation; et
- une unité de purification au moins partielle du CO du type à perméation, dont l'entrée est reliée à la sortie de production de mélange CO/H₂ de l'unité PSA, l'unité de perméation étant équipée de membranes ayant une forte sélectivité CO/H₂.

Des exemples de mise en oeuvre de l'invention vont maintenant être décrits en regard des dessins annexés, sur lesquels :
- la Figure 1 est un schéma d'une installation de production de CO conforme à l'invention;
- la Figure 2 est un schéma de l'unité PSA de cette installation;
- la Figure 3 est un diagramme qui illustre le cycle de fonctionnement de l'unité PSA de la Figure 2;
- la Figure 4 est un schéma d'une variante de l'installation ; et
- la Figure 5 est un diagramme analogue à la Figure 3 illustrant une autre variante.

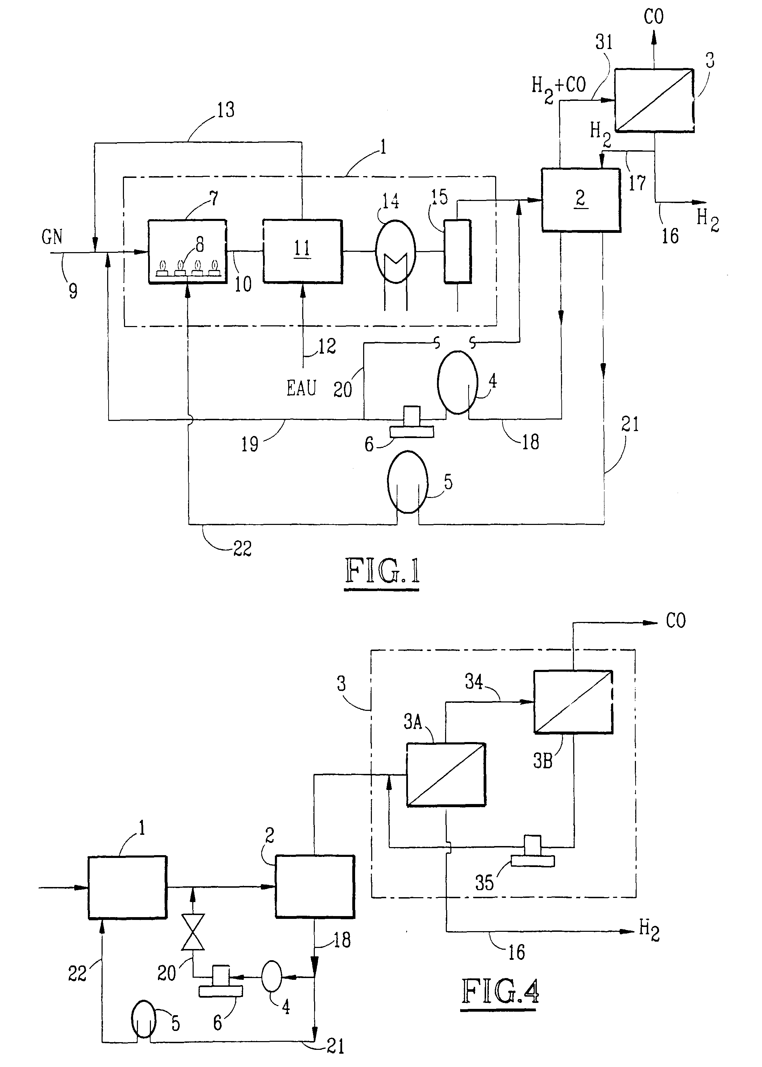

L'installation représentée à titre illustratif sur la Figure 1 comprend essentiellement une unité 1 de réformage à la vapeur, une unité 2 d'adsorption à modulation de pression (PSA), une unité 3 de perméation, deux capacités-tampons 4 et 5 et un compresseur 6. L'unité 3 est équipée de membranes, par exemple en polyaramide, ayant une forte sélectivité CO/H₂.

L'unité 1 comprend une chambre de réformage 7 équipée de brûleurs 8 et alimentée par une charge hydrocarbonée légère, par exemple du gaz naturel, via une conduite d'alimentation 9. Sa conduite de sortie 10, qui aboutit à l'entrée de l'unité PSA 2, traverse un récupérateur de chaleur 11 alimenté en eau déminéralisée via une conduite 12. L'eau vaporisée en 11 est introduite dans la conduite 9 via une conduite 13.

La conduite 10 traverse ensuite un dispositif de refroidissement 14, puis l'eau condensée est éliminée dans un séparateur de phases 15. Le gaz issu de ce dernier constitue un gaz de synthèse, ou de réformage, qui contient majoritairement de l'hydrogène et du CO et des quantités substantielles de méthane et de CO₂, ainsi que de l'eau. Une composition typique peut être 68% H₂, 22% CO, 6% CO₂ et 4% CH₄ (hors eau). Les unités 2 et 3 servent à purifier le CO, de la manière qui sera maintenant décrite.

De façon générale, l'unité PSA 2 produit un mélange CO/H₂ à peu près pur à partir du gaz de synthèse. Ce mélange est séparé par l'unité 3 d'une part en un flux de CO pur sous pression, d'autre part en un flux d'hydrogène impur contenant quelques pour-cent, typiquement 1 à 3%, de CO, sous basse pression, typiquement sous environ 1,3 bar absolu. L'hydrogène peut être envoyé via une conduite 16 à un utilisateur, et au moins une partie est utilisée pour régénérer l'adsorbant de l'unité 2 via une conduite 17.

De plus, l'unité PSA 2 produit deux fractions résiduaires : une première fraction relativement riche en CO₂, qui est envoyée à la capacité-tampon 4 via une conduite 18. De là, cette fraction est comprimée dans le compresseur 6 et recyclée à l'alimentation 9 de l'unité de réformage 1, via une conduite 19. Eventuellement, un flux de cette même fraction comprimée, qui contient une quantité substantielle de CO, peut être recyclé vers l'unité PSA 2, via une conduite 20, en vue d'en récupérer le CO.

La seconde fraction résiduaire de l'unité 2, riche en hydrogène, est envoyée via une conduite 21 à la capacité-tampon 5, et de là, via une conduite 22, à l'alimentation des brûleurs 8.

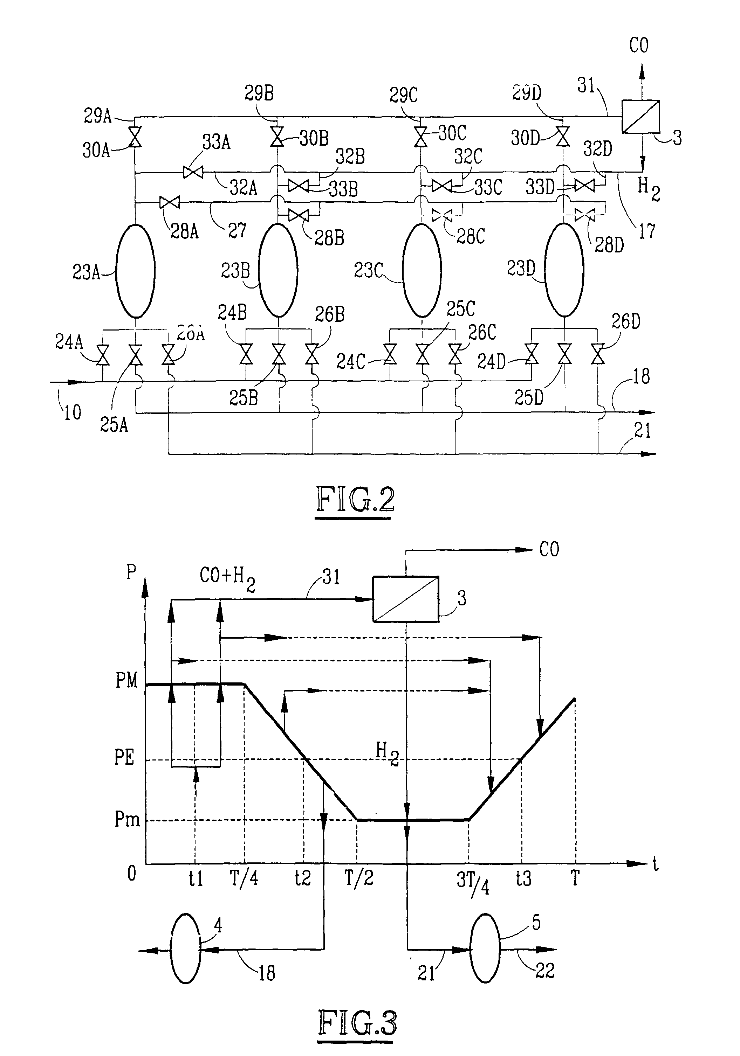

On décrira maintenant sommairement l'unité PSA 2 en regard de la Figure 2.

Cette unité 2 comprend essentiellement de deux à douze adsorbeurs, et dans cet exemple quatre adsorbeurs 23A à 23D, disposés en parallèle. L'entrée, c'est-à-dire l'extrémité inférieure, de chaque adsorbeur peut être reliée sélectivement :
- via une vanne 24A à 24D à la conduite d'alimentation 10;
- via une vanne 25A à 25D à la conduite de recyclage 18; et
- via une vanne 26A à 26D à la conduite de recyclage 21.

La sortie, c'est-à-dire l'extrémité supérieure, de chaque adsorbeur peut être reliée sélectivement :
- à la sortie de l'un quelconque des autres adsorbeurs via une conduite d'équilibrage 27 et des vannes 28A à 28D;
- à l'entrée de l'unité de perméation 3 via une conduite 29A à 29D équipée d'une vanne 30A à 30D. Les quatre conduites 29A à 29D se rejoignent en une conduite unique 31 d'alimentation de l'unité 3 en mélange CO/H₂; et
- à la conduite de recyclage d'hydrogène 17 via des conduites 32A à 32D équipées de vannes 33A à 33D.

Chaque adsorbeur contient un lit d'un adsorbant ayant une très forte affinité pour les composés H₂O, CO_{2,}, CH₄ et une très faible affinité pour le CO et l'hydrogène. Un exemple d'un tel adsorbant est le charbon actif.

L'installation comporte par ailleurs des moyens, connus en soi et non représentés, de commande, de régulation et d'alimentation électrique et en fluide réfrigérant, adaptés pour effectuer le cycle illustré sur la Figure 3.

Sur la Figure 3, où les temps t sont portés en abscisses et les pressions absolues P en ordonnées, les traits orientés par des flèches indiquent les mouvements et les destinations des courants gazeux et, en outre, le sens de circulation dans l'adsorbeur :

Le cycle est représenté pour un adsorbeur, par exemple l'adsorbeur 23A. Les autres adsorbeurs subissent un cycle identique mais décalé dans le temps de T/4, T/2 et 3T/4, où T est la période du cycle.

La pression haute PM du cycle est voisine de la pression de réformage, typiquement de l'ordre de 30 bars absolus. La pression basse Pm du cycle est au moins égale à la pression atmosphérique et est typiquement de l'ordre de 1,3 bar absolu.

Le cycle de la Figure 3 comprend les étapes successives suivantes :
(a) De t = 0 à T/4, une étape de production sensiblement isobare à la pression haute PM du cycle. Le mélange CO/H₂ de production est pour partie envoyé à l'unité de perméation 3 via la conduite 31.
   Dans une première partie (a1) de l'étape (a), de t = 0 à t1, une fraction du mélange est envoyée à un autre adsorbeur en cours de première recompression à contre-courant. De t1 à T/4 (sous-étape (a2)), une fraction du mélange est envoyée à un autre adsorbeur en cours de recompression finale à contre-courant.
(b) De T/4 à t2<T/2, une étape de première décompression à co-courant, jusqu'à une pression d'équilibrage PE, par équilibrage de pressions avec un autre adsorbeur en cours de première recompression à contre-courant.
(c) De t2 à T/2, une étape de décompression finale à contre-courant de la pression PE jusqu'à la pression basse Pm du cycle. Le gaz résiduaire soutiré, au cours de cette étape, de l'entrée de l'adsorbeur est riche en CO₂, CH₄ et CO et est recyclé, via la conduite 18, la capacité 4, le compresseur 6 et la conduite 19, à l'entrée de l'unité de réformage 1. Le recyclage d'une fraction riche en CO₂ permet de déplacer l'équilibre de la réaction CO+H₂O = CO₂+H₂ dans le sens de la production de CO, et donc d'augmenter le rendement en CO de l'installation.
(d) De T/2 à 3T/4, une étape d'élution au voisinage de la pression basse Pm. Au cours de cette étape, de l'hydrogène résiduaire de l'unité de perméation 3, constituant le perméat de cette unité, est introduit à contre-courant dans l'adsorbeur, et le gaz résiduaire issu de l'entrée de celui-ci est envoyé aux brûleurs 8 via la conduite 21, la capacité 5 et la conduite 22. L'hydrogène basse pression est ainsi valorisé une première fois comme gaz d'élution de l'adsorbant, et une deuxième fois en tant que gaz combustible pour réaliser le réformage.
(e) De 3T/4 à t3, avec t3-3T/4 = t2-T/4, une étape de première recompression à contre-courant par équilibrage de pressions avec un autre adsorbeur en cours d'étape (b) de première décompression à co-courant. Au cours de cette étape, l'adsorbeur reçoit simultanément à contre-courant du gaz de production CO/H₂ en provenance d'un autre adsorbeur en sous-étape (a1) de production.
(f) De t3 à T, une étape de recompression finale à contre-courant jusqu'à la pression haute PM, avec du mélange CO/H₂ provenant du même autre adsorbeur en sous-étape (a2) de production.

On peut obtenir, avec l'installation décrite en regard des Figures 1 à 3, du CO à haute pureté, contenant moins de 1% d'hydrogène et moins de 50 vpm (parties par million en phase gazeuse) de CH₄.

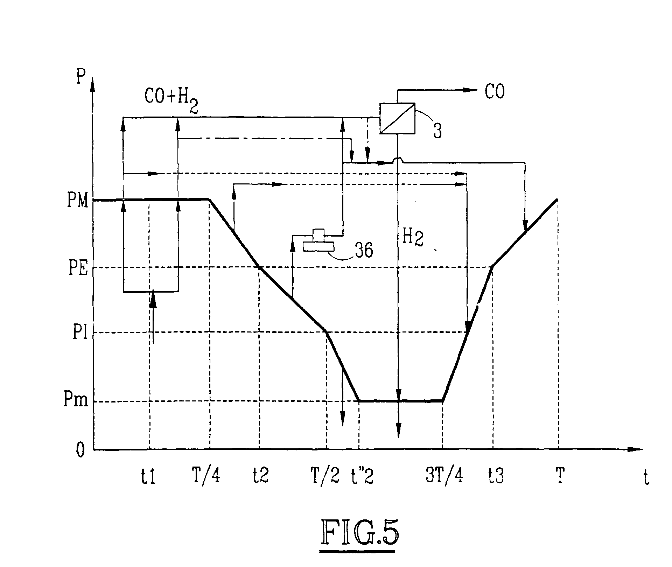

La Figure 4 illustre une variante simplifiée de l'installation de la Figure 1, dans laquelle le gaz résiduaire de l'unité 2 n'est pas divisé en deux fractions mais est envoyé globalement vers les brûleurs 8 via la conduite 21 en tant que gaz combustible, dans la mesure nécessaire à ces brûleurs. Le reste du gaz résiduaire est recomprimé en 6 et recyclé vers l'entrée de l'unité PSA via la conduite 20.

Par ailleurs, dans l'exemple de la Figure 4, l'unité de perméation 3 est à deux étages : le gaz riche en CO issu du premier étage 3A est envoyé via une conduite 34 au deuxième étage 3B, où l'épuration du CO se poursuit pour fournir du CO de très haute pureté. Le perméat du premier étage est envoyé à une utilisation via la conduite 16, tandis que celui du second étage, plus riche en CO, est recomprimé par un compresseur 35 et recyclé à l'entrée du premier étage 3A pour en récupérer le CO.

Le cycle PSA illustré à la Figure 5 diffère de celui de la Figure 3 par les points suivants.
(1) De t2 à T/2, l'adsorbeur subit une seconde décompression à co-courant (b2), de la pression PE à une pression intermédiaire PI. Le gaz issu de l'adsorbeur, encore riche en CO, est recomprimé à la pression haute PM par un compresseur auxiliaire 36 puis, pour partie, mélangé au gaz de production d'un autre adsorbeur en étape (a) de production et, pour le reste, envoyé à la sortie d'un autre adsorbeur en étape (f) de recompression finale.
   Comme indiqué en trait mixte sur la Figure 5, en variante ou en supplément, cette recompression finale peut également faire appel à du gaz de production comme à la Figure 3, et/ou à du mélange de ce gaz et de gaz recomprimé par le compresseur 36.
(2) L'étape (c) de décompression finale à contre-courant est décalée de T/2 à t"2<3T4, et l'étape (d) d'élution est raccourcie d'autant.

Le mode de mise en oeuvre de la Figure 5 permet d'augmenter le rendement d'extraction en CO pur, d'autant plus que la pression PI est plus basse.

Dans chaque mode de mise en oeuvre de l'invention, en réglant les paramètres de la perméation, on peut utiliser le perméateur 3 pour produire, en parallèle, selon les besoins, un mélange CO/H₂ ayant une teneur ajustée en CO et contenant très peu d'impuretés, typiquement moins de 1 vpm H₂O, et de quelques dizaines à quelques centaines de vpm de CO₂ et de CH₄.

## Revendications

1. Procédé de production de CO (monoxyde de carbone) à partir d'un gaz d'alimentation contenant essentiellement, outre le CO, de l'hydrogène et d'autres constituants, notamment du CO₂ (dioxyde de carbone), du méthane et de l'eau, où :
- dans une première étape, on envoie le gaz d'alimentation dans une unité (2) d'adsorption à modulation de pression (PSA) qui contient un adsorbant ayant une faible affinité pour l'hydrogène et le CO et une forte affinité pour lesdits autres constituants; et
- on envoie le gaz de production de l'unité PSA (2), constitué essentiellement d'un mélange CO/H₂ , à une unité (3) de purification du CO du type à perméation équipée de membranes ayant une forte sélectivité CO/H₂ fournissant en sortie du CO pure

2. Procédé suivant la revendication 1, caractérisé en ce qu'on utilise au moins une partie de l'hydrogène résiduaire de l'unité de perméation (3) pour régénérer ledit adsorbant.

3. Procédé suivant l'une des revendications 1 et 2, caractérisé en ce que, au cours du cycle PSA, chaque adsorbeur subit une étape de décompression partielle à co-courant au cours de laquelle le gaz issu de sa sortie est recomprimé (en 36) à la pression haute (PM) du cycle et envoyé, au moins en partie, à l'unité de purification (3).

4. Procédé suivant l'une des revendications 1 à 3, caractérisé en ce qu'on recycle à l'alimentation de l'unité PSA (2) au moins une fraction du gaz résiduaire de l'unité PSA contenant une quantité substantielle de CO, après avoir comprimé cette fraction (en 6).

5. Procédé suivant l'une des revendications 1 à 4, dans lequel le gaz d'alimentation est un gaz de réformage à la vapeur d'une charge hydrocarbonée, caractérisé en ce qu'on recycle à l'entrée de l'unité de réformage (1) au moins une fraction relativement riche en CO₂ du gaz résiduaire de l'unité PSA (2), après avoir comprimé cette fraction (en 6).

6. Procédé suivant l'une des revendications 1 à 5, dans lequel le gaz d'alimentation est un gaz de réformage à la vapeur d'une charge hydrocarbonée, caractérisé en ce qu'on recycle à l'alimentation de brûleurs (8) de l'unité de réformage (1) au moins une fraction relativement riche en hydrogène du gaz résiduaire de l'unité PSA (2).

7. Installation de production de CO (monoxyde de carbone) à partir d'un gaz d'alimentation contenant essentiellement, outre le CO, de l'hydrogène et d'autres constituants, notamment du CO₂ (dioxyde de carbone), du méthane et de l'eau, comprenant :
- une unité (2) d'adsorption à modulation de pression (PSA) qui contient un adsorbant ayant une faible affinité pour l'hydrogène et le CO et une forte affinité pour lesdits autres constituants, cette unité étant reliée à une source dudit gaz d'alimentation; et
- une unité (3) de purification au moins partielle du CO dont l'entrée est reliée à la sortie de production de mélange CO/H₂ de l'unité PSA, l'unité (3) de purification étant une unité de perméation équipée de membranes ayant une forte sélectivité CO/H₂.

8. Installation suivant la revendication 7, caractérisée en ce que la sortie de perméat de l'unité de perméation (3) est reliée à une entrée de gaz d'élution de l'unité PSA (2).

9. Installation suivant l'une des revendications 7 et 8, caractérisée en ce que l'unité PSA (2) comprend une sortie de gaz résiduaire qui peut être reliée sélectivement, via un compresseur (6), à l'entrée de cette unité PSA.

10. Installation suivant l'une des revendications 7 à 9, caractérisée en ce qu'elle comprend un compresseur auxiliaire (36) dont l'aspiration peut être reliée sélectivement à la sortie de l'un quelconque des adsorbeurs de l'unité PSA, et dont le refoulement est relié à l'entrée de l'unité de purification (3).

11. Installation suivant l'une des revendications 7 à 10, comprenant en outre une unité (1) de réformage à la vapeur d'une charge hydrocarbonée, qui fournit ledit gaz d'alimentation, caractérisée en ce que l'unité PSA (2) comprend une sortie de gaz résiduaire qui peut être reliée à l'entrée de l'unité de réformage (1) par l'intermédiaire d'un compresseur (6).

12. Installation suivant l'une des revendications 7 à 11, comprenant en outre une unité (1) de réformage à la vapeur d'une charge hydrocarbonée, qui fournit ledit gaz d'alimentation, caractérisée en ce que l'unité PSA (2) comprend une sortie de gaz résiduaire qui peut être reliée à des brûleurs (8) de l'unité de réformage (1).
